Europäisches Patentamt

European Patent Office

Office européen des brevets

(19)

(11) Publication number: **0 269 345 B1**

(12) EUROPEAN PATENT SPECIFICATION

(45) Date of publication of patent specification: **02.09.92**  (51) Int. Cl.⁵: **B29C 45/16**, B29C 45/26, B01L 3/02

(21) Application number: **87310114.1**

(22) Date of filing: **16.11.87**

(54) Method of moulding a micropipette.

(30) Priority: **27.11.86 JP 283009/86**

(43) Date of publication of application:
**01.06.88 Bulletin 88/22**

(45) Publication of the grant of the patent:
**02.09.92 Bulletin 92/36**

(84) Designated Contracting States:
**AT BE CH DE ES FR GB GR IT LI NL SE**

(56) References cited:
**DE-A- 2 110 156**
**JP-B- 5 924 665**
**US-A- 4 184 836**
**US-A- 4 647 419**

(73) Proprietor: **Mochida Pharmaceutical Co., Ltd.**
**1-7, Yotsuya Shinjuku-ku**
**Tokyo(JP)**

(72) Inventor: **Masahiro, Baba**
**666-5, 3-Chome, Nisshin-Cho**
**Omiya-Shi Saitama-Ken(JP)**

(74) Representative: **Clifford, Frederick Alan et al**
**MARKS & CLERK 57/60 Lincoln's Inn Fields**
**London WC2A 3LS(GB)**

# Description

The present invention relates to a method of injection-moulding a micropipette used to measure small quantities of liquids by drops.

According to a conventional method (JP-A-59-24 665) for injection-moulding a micropipette, using an injection mold having a core pin within its pipette-shaped cavity, a molten moulding material whose weight is equal to the total weight of the pipette to be moulded is forced forward under pressure, by one uninterrupted movement of a plunger, through a cavity entrance located at the end of the cavity corresponding to the rearward end of the pipette (i.e. that rearward end to be later fitted with a hollow rubber bulb) into the relative cool cavity, where the molten moulding material thus injected cools and resolidifies to form a moulded pipette.

In this procedure, the molten moulding material must flow over the whole length of the pipette towards the end delivery port, the accuracy of which is crucial to drop-formation. For reasons discussed more fully below with reference to the drawings there is therefore a tendency for a "flash", i.e. a thin unwanted protrusion of solidified polymer to form around at least part of the delivery outlet.

Flash formation can lead to inaccuracy of dispensed drop size. As again described in more detail below it is closely related to pressure exerted on the polymer, whereby the manufacturer has to work between, on the one hand, high pressure operation leading to possible flash formation, extra wear on the precision mould, and the need for expensive visual checking and selection of suitable products or, on the other hand low pressure operation with less risk of flash formation but greaer risk of incomplete mould filling ( a "short shot"), bubble formation in the polymer and occasional high pressure build-up due to a tendency to premature solidification along the length of the mould and leading to stresses and warpage in the finished article.

Constructional modifications to the pipette have been proposed to overcome the problem,e.g. in Japanese Patent Publication No. Sho 59-24665. This describes a pipette which instead of terminating in a simple transverse edge defining the delivery port is formed at this tapering end with a coaxial cylindrical cavity defining the delivery port itself. As will be described below in more detail, any flash formation, which is essentially a phenomenon taking place at the inner tapering face of the pipette, takes place at least initially within this cylindrical cavity. If the flash is short enough it therefore does not affect drop formation, which is predominantly a function of external peripheral structure: but if it is too long it will still protrude enough to be deleterious to the accurate formation of drops.

The present invention sets out to prevent or minimise flash formation, in either the simple or modified pipette construction as defined above, by alteration of moulding procedures.

The invention consists in a method of injection moulding of a micropipette of the type which comprises a rearward hollow cylindrical portion and a forward hollow portion tapering over the whole or part of its length or of generally smaller diameter than the rearward cylindrical portion which comprises:-

(a) injecting into a mould cavity entrance at or near the region between the rearward and forward portions of the eventual micropipette a first body of molten polymer of weight essentially equal to the weight needed to mould that portion of the pipette between the cavity entrance and the foremost end of the micropipette, and causing or allowing said first body of molten material to flow to

the said foremost end and at least start to cool and resolidify and

(b) immediately injecting through the same entrance a second body of molten polymer of a weight essentially equal to that of that portion of the micropipette between the cavity entrance and the rearmost end of the micropipette, and causing or allowing said second body of molten polymer to flow to the said rearward end and at least start to cool and resolidify;

whereby the last portion of the second body, being the hottest polymer present welds to the adjacent portion of the solidying but still hot first body of polymer to give a monobloc micropipette construction.

Preferably, the forward portion tapers uniformly from the rearward portion, and the cavity entrance is located where the two portions meet.

An embodiment of the invention will be further described with reference to the accompanying drawings, in which:

Figure 1 is a diagrammatic longitudinal section of a micropipette which may be made by the method of the present invention;

Figure 2 is a diagrammatic longitudinal section of an injection mould suitable for carrying out the method of the invention; and

Figures 3 and 4 are enlarged longitudinal sections of the delivery ports of micropipettes.

A micropipette 1 is a polymer tube which tapers from a point 2 to a narrower open delivery port 3 and is typically used with a hollow rubber pressure bulb 4 fixed upon rearward end configuration 5 to give dropwise delivery of liquid from within the tube.

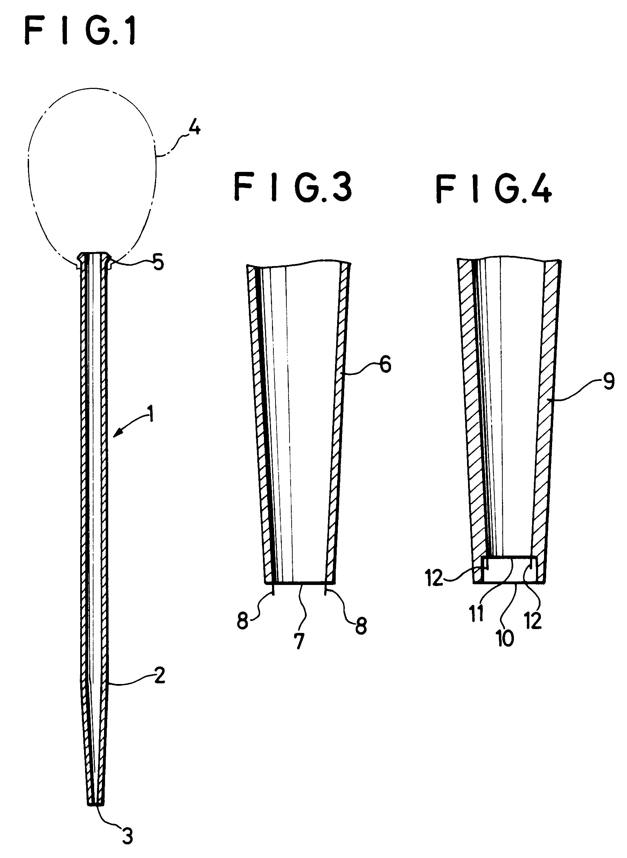

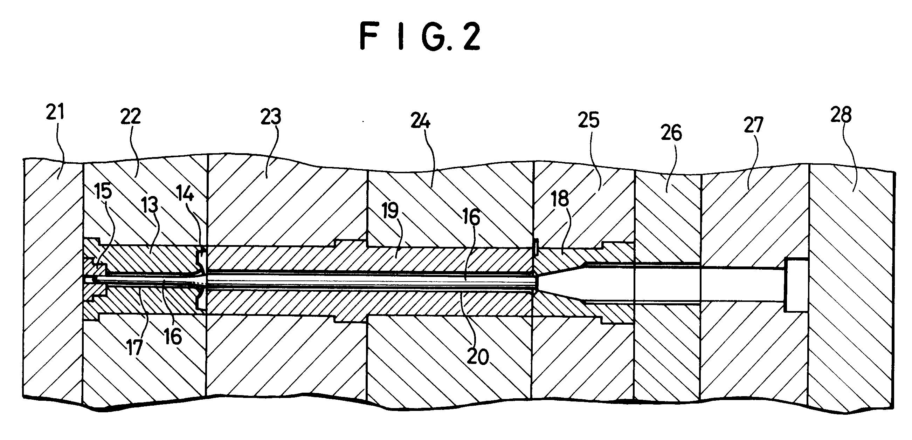

The micropipette can for example have a simple opening 7 in thin wall 6 (Figure 3) or can be a delivery port opening 10 as defined by a cylindrical recess 11 in rather thicker wall 9 (Figure 4). In either instance a known manufacturing problem is the formation of flashes (thin undesired protrusions of polymer material formed during moulding) as shown at 8 and 12 in Figures 3 and 4 respectively.

The mould shown in Figure 2 comprises stationary members and movable members. Stationary members are arranged on stationary plate 21 and comprise, from left to right, a bolster block 22 surrounding and holding a retainer plate 13 defining a tapered or inner portion 17 of the mould cavity and locating a central cavity end plate 15; and bolster blocks 23 and 24 each surrounding and holding a retainer plate 19 defining a cylindrical or outer portion 20 of the mould cavity.

Movable members are arranged on movable platen 24 and comprise stripper plate 25 surrounding and holding stripper bushing 18, stripper plate 26 and core-pin retainer plate 27.

Core pin 26, during use, is held at its narrow (forward) end in central cavity end plate 15 and at its outer end in core-pin retainer plate 27 and thus defines the annular pipette walls along spaces 17 and 20. It will be appreciated that the space 17 can be tapered over its whole length, or over part of its length, or be of narrow cylindrical configuration, and also that the endmost configuration itself can be as shown in Figures 3 or Figure 4.

The above features of Figure 2 are generally known. The novel feature is the provision of an additional polymer-supply runner 14, typically at or near the beginning of the inner or tapering portion 17, e.g. machined as shown in the end face of plate 13.

The operation of the above equipment will now be described both in the absence of polymer-supply runner (as in the prior art, leading to the characteristic disadvantages thereof) and with such runner 14 operative in accordance with the present invention.

Without runner 14, and in accordance with the prior art, hot molten polymer in an amount sufficient to fabricate the pipette is pumped from a rearward gate (not shown) in the mould by a single stroke of a plunger (also not shown) into and along the cavity 20 and 17. Typically, as the hot polymer progresses along the cooler mould parts it begins to acquire a higher viscosity, and the pressure exerted must compensate for this. Also, the mould space at 17 is typically less than that at 20 and decreases down to the very end of the mould where the highest pressures are to be encountered.

Attempts to overcome these high pressure control problems arising from the elongate and diminishing nature of the mould spaces have not hitherto been successful.Thus, the use of generally lower pressures is not open to the operative since (a) the material may solidify before it reaches the end of the pipette to be moulded (b) bubbles may form in the molten material and (c) low pressures are susceptible to fluctuation to overcome local viscosity changes and this fluctuation manifests itself as a tendency to warping of the finished product.

However, the conventional high pressures typically lead to small over-supply of polymer which penetrates down towards the very end of the pin held (with a necessary small clearance) in the cavity and plate 15. It thus causes wear at this dimensionally sensitive area of the mould which defines the pin position, so that the problem becomes progressively worse. Moreover, penetration into this gap gives an undesirable "flash" or thin polymer protrusion beyond the inner end wall of the tapered portion of the pipette. This flash is shown diagrammatically at 8 in Figure 3 (although often in practice one side extends more than the other as an irregular formation) and affects the size of any drop which would otherwise form upon the accurately sized end of the pipette when in use.

Figure 4 shows how the use of a cylindrical recess 11 can to some extent accommodate a flash 12 without it affecting the drop size, which is then essentially governed by the outer perimeter of the pipette orifice wall; but even then too long a flash will interfere and give an unacceptable product.

Trimming of the flash is not economic for such small of high-volume production, and even inspection and rejection is a burdensome expense. The present invention thus modifies the mould procedure e.g.for either embodiment of Figures 3 and 4.

In the operation of the present invention runner 14 is used.

A first amount of hot molten material is injected into tapered portion 17 of the relatively cool injection mould through an entrance at 14, located at the taper-beginning portion of the cavity i.e. corresponding to point 2 of a pipette 1.It rapidly cools on contact with cool cavity walls and resolidifies from the front end toward the taper-beginning portion, without flash formation since pressure conditions can be readily controlled.

Then, with the mould still closed, a second amount of hot moulding material is subsequently injected through the same cavity entrance i.e. at 14 into cylindrical portion 20 of the cavity. Again it chills quickly on contact with cool cavity walls and resolidifies from the rearward end towards the taper-beginning portion 2. Its hottest region welds perfectly with still-hot mass of the first moulding material. A monobloc moulded pipette 1 is thus obtained. The rearward end 5 (to be later fitted with the hollow rubber bulb 4) communicates with the delivery port 3 by means of a strong weld formed at the taper-beginning portion 2.

According to the method of the invention, much lower injection pressures can be used since the respective flow distances of the first and second body of molten moulding materials are shorter owing to the fact that a cavity entrance is located at a taper-beginning portion 2, and since the pressure exerted on the moulding material near the front annular edge (corresponding to that of the delivery port 3) is much lower on account of the division of one conventional mould shot into two successive shots,

Regulation of injection pressure is precise and easier for a first and a second shot especially near the front annular edge. Pipettes 1 can be obtained which are free from such defects as flash 8 or 12, burn marks, an incomplete or short shot, bubbles, and warpage, thus eliminating the need for inspection of the products. The method of the invention could also be used to eliminate the need for an inner cylindrical recess 11 and indeed any desired shape of delivery port can be used without the formation of a flash 8.

## Claims

1. A method of injection moulding of a micropipette (1) of the type which comprises a rearward hollow cylindrical portion (2 to 5) and a forward hollow portion (2 to 3) tapering over the whole or part of its length or of generally smaller diameter than the rearward cylindrical portion (2 to 5) which comprises:-
   (a) injecting into a mould cavity entrance (14) at or near the region (2) between the rearward and forward portions (2 to 5), (2 to 3) of the eventual micropipette (1) a first body of molten polymer of weight essentially equal to the weight needed to mould that portion (2 to 3) of the pipette between the cavity entrance (14) and the foremost end (3) of the micropipette (1), and causing or allowing said first body of molten material to flow to the said foremost end (3) and at least start to cool and resolidify and
   (b) immediately thereafter injecting through the same entrance (14) a second body of molten polymer of a weight essentially equal to that of the portion (2 to 5) of the micropipette (1) between the cavity entrance (14) and the rearmost end (5) of the micropipette (1), and causing or allowing said second body of molten polymer to flow to the said rearward end (5) and at least start to cool and resolidify;
   whereby the last portion of the second body, being the hottest polymer present welds to the adjacent portion of the solidying but still hot first body of polymer to give a monobloc micropipette construction.

2. A method as claimed in claim 1 in which the forward portion (2 to 3) tapers uniformly from the rearward portion (2 to 5), and the cavity entrance (14) is located where the two portions meet.

## Patentansprüche

1. Spritzgußverfahren zur Herstellung einer Feinpipette (1) des Typs, der einen hinteren hohlzylindrischen Abschnitt (2 bis 5) und einen vorderen hohlzylindrischen Abschnitt (2 bis 3) aufweist, der sich über seine gesamte Länge oder einen Teil seiner Länge verjüngt oder generell einen kleineren Durchmesser besitzt als der hintere hohlzylindrische Abschnitt (2 bis 5), dadurch gekennzeichnet, daß
   (a) in einen Einlaß (14) des Formenhohlraums im oder in der Nähe des Bereichs (2) zwischen den vorderen und hinteren Abschnitten (2 bis 5), (2 bis 3) der schließlichen Feinpipette (1) ein erster Körper aus geschmolzenem Polymer mit einem Gewicht, das im wesentlichen gleich dem für die Formung des zwischen dem Hohlraumeinlaß (14) und dem vordersten Ende (3) der Feinpipette (1) liegenden Abschnitts (2 bis 3) der Pipette benötigten Gewichts ist, eingespritzt und bewirkt oder zugelassen wird, daß der erste Körper aus geschmolzenem Material zu diesem vordersten Ende (3) fließt und zumindest beginnt, sich abzukühlen und wieder zu verfestigen, und
   (b) daß unmittelbar danach durch denselben Einlaß (14) ein zweiter Körper aus geschmolzenem Polymer mit einem Gewicht, das im wesentlichen gleich jenem des Abschnitts (2 bis 5) der Feinpipette zwischen dem Hohlraumeinlaß (14) und dem hintersten Ende (5) der Feinpipette ist, eingespritzt und bewirkt oder zugelassen wird, daß dieser zweite Körper aus geschmolzenem Polymer zu diesem hinteren Ende (5) fließt und zumindest beginnt, sich abzukühlen und wieder zu verfestigen,
   wobei der letzte Abschnitt des zweiten Körpers, der das heißeste Polymer darstellt, das vorhanden ist, mit dem angrenzenden Abschnitt des sich verfestigenden, jedoch noch heißen ersten Körpers aus Polymer verschmilzt, derart, daß eine Feinpipette aus einem Guß entsteht.

**2.** Verfahren nach Anspruch 1, dadurch gekennzeichnet, daß sich der vordere Abschnitt (2 bis 3) von dem hinteren Abschnitt (2 bis 5) aus gleichmäßig verjüngt und daß sich der Hohlraumeinlaß (14) dort befindet, wo sich die beiden Abschnitte treffen.

**Revendications**

**1.** Un procédé de moulage par injection d'une micropipette (1) du type comprenant une partie cylindrique arrière creuse (2 à 5) et une partie avant creuse (2 à 3) effilée sur toute sa longueur ou sur une partie de sa longueur ou de diamètre généralement inférieur à celui de la partie cylindrique arrière (2 à 5) comprenant:-

(a) injection dans une entrée d'un creux de moule (14) au niveau ou près de la région (2) entre les parties arrière et avant (2 à 5), (2 à 3) de la micropipette finale (1) d'un premier corps en polymère fondu d'un poids pratiquement égal au poids nécessaire pour mouler cette partie (2 à 3) de la pipette entre l'entrée du creux (14) et l'extrémité avant (3) de la micropipette (1), entraînant ou permettant l'écoulement de ce premier corps en matériau fondu vers ladite extrémité avant (3) en vue de commencer au moins son refroidissement et sa resolidification et

(b) injection, immédiatement après, à travers la même entrée (14), d'un deuxième corps en polymère fondu, d'un poids pratiquement égal a celui de la partie (2 à 5) de la micropipette (1), entre l'entrée du creux (14) et l'extrémité arrière (5) de la micropipette (1), entraînant ou permettant l'écoulement du dit deuxième corps en polymère fondu vers ladite extrémité arrière (5) en vue de commencer au moins son refroidissement et sa resolidification;

la dernière partie du deuxième corps, constituant le polymère le plus chaud présent, étant ainsi soudée à la partie adjacente du premier corps en cours de solidification, mais toujours chaude du polymère, en vue de la production d'une micropipette à construction monobloc.

**2.** Un procédé selon la revendication 1, dans lequel la partie avant (2 à 3) est effilée uniformément à partir de la partie arrière (2 à 5), l'entrée du creux (14) étant située au point de rencontre des deux parties.

F I G.1

F I G.3

F I G.4

4

5

1

2

3

6

8

7

8

9

12

11

10

12

# F I G. 2

EP 0 269 345 B1